# EUROPÄISCHE PATENTSCHRIFT

(11) **EP 3 967 981 B1**
(45) Veröffentlichungstag und Bekanntmachung des Hinweises auf die Patenterteilung: **24.09.2025**
(21) Anmeldenummer: 21191431.2
(22) Anmeldetag: 16.08.2021
(51) Int. Cl.: G01D 4/00, G06Q 50/06, H02J 3/00, G06Q 20/38, G06Q 30/04, G06Q 30/06, G07F 15/00, H02J 13/00

(54) **VERFAHREN ZUM KAUF UND VERKAUF VON HERKUNFTSNACHWEISEN VON ELEKTRISCHER ENERGIE**
METHOD FOR PURCHASE AND SALE OF PROOF OF ORIGIN OF ELECTRICAL ENERGY
PROCÉDÉ D'ACHAT ET DE VENTE DE GARANTIES D'ORIGINE DE L'ÉNERGIE ÉLECTRIQUE

(30) Priorität: 02.09.2020 CH 10802020
(43) Veröffentlichungstag der Anmeldung: 16.03.2022
(73) Patentinhaber: Virtual Global Trading AG, 5000 Aarau (CH)
(72) Erfinder: MARTINOVIC, Gregor, 4704 Niederbipp (CH); SEEHOLZER, Michael, 5000 Aarau (CH)
(74) Vertreter: Prins Intellectual Property AG

(56) Entgegenhaltungen:
- JP-A- 2020 119 143
- US-A1- 2011 208 637
- US-A1- 2017 357 280

## Beschreibung

### Technisches Gebiet

Die Erfindung betrifft ein Verfahren zum Kauf und Verkauf von elektrischer Energie, insbesondere erneuerbarer Energie.

### Stand der Technik

Erneuerbare Energie, z.B. Solarenergie, die auf dem Dach eines Privathaushalts erzeugt wird, wird zurzeit typischerweise bei Nichtgebrauch durch den Privathaushalt ins Netz gespeist und dem Besitzer der Solaranlage zu einem Fixpreis vergütet.

Verbraucher von Energie, die keine Photovoltaik-Anlage besitzen, können ihren Strom von ihrem lokalen Netzbetreiber zu einem fixen Strom- und Netzpreis kaufen. In einigen Fällen können Verbraucher Strom vom Netzbetreiber zu einem Aufpreis kaufen, der spezifisch den Betrieb einer kommunalen Solaranlage oder eines Wasserkraftwerks unterstützt. Der Strommix, der vom Verbraucher bezogen wird, wird dabei vom Netzbetreiber bestimmt.

In der Patentliteratur ist aus CN107480987 ein System für den Verkauf von elektrischer Energie aus erneuerbaren Quellen bekannt, bei dem mittels Blockchain-Technologie Energie-Zertifikate erstellt und gehandelt werden. US2017357280, JP 2020 119143 und US2011208637 beschreiben ebenfalls Verfahren mit Energiezertifikaten. Die US2017357280 offenbart im Sinne von Anspruch 1 ein Verfahren für den Kauf und Verkauf von Herkunftsnachweisen von Energie aus erneuerbaren Energiequellen umfassend folgende Schritte:
Registrierung auf einem Rechner von mehreren Energiezählern zum Zählen von aus erneuerbarer Energiequelle generierter, elektrischer Energie, die dazu ausgerüstet sind, aus der erneuerbaren Energiequelle generierte, elektrische Energie in einem vorgegebenen Zeitintervall zu messen und einen entsprechenden Messwert über eine Schnittstelle an ein Speichermedium zu übermitteln;
Übermittlung von Daten von jedem registrierten Energiezähler an das Speichermedium im vorgegebenen Zeitintervall, wobei die Daten jedes Energiezählers die gemessene Energiemenge jedes Zeitintervalls umfassen;
Generierung durch den Rechner von Original-Energie-Zertifikaten jeweils für die Energiemenge jedes vorgegebenen Zeitintervalls jedes registrierten Energiezählers, wobei jedes Original-Energie-Zertifikat einen ersten Hash-Wert enthält, der aus mehreren von Daten gebildet wird;
Anzeige eines oder mehrerer der Original-Energie-Zertifikate auf einer auf dem Rechner betriebenen Software-Plattform, wobei die Software-Plattform von registrierten Energieverbrauchern und Energieproduzenten einsehbar ist.

### Beschreibung der Erfindung

Der vorliegenden Erfindung ist die Aufgabe gestellt, ein Verfahren für den Kauf und Verkauf von elektrischer Energie zu schaffen, das den Kauf und Verkauf von elektrischer Energie insbesondere aus erneuerbaren Energiequellen in möglichst regionaler Nähe ermöglichen und fördern. Die vorliegende Erfindung löst die Aufgabe durch die Merkmale des unabhängigen Anspruchs 1, wobei mögliche Ausführungsformen in den abhängigen Ansprüchen offenbart werden.

Beispielhaft umfasst ein Verfahren für den Kauf und Verkauf von Herkunftsnachweisen von elektrischer Energie aus erneuerbaren Energiequellen folgende Schritte:
- Registrierung auf einem Rechner von mehreren Energiezählern zum Zählen von aus einer erneuerbaren Energiequelle generierter, elektrischer Energie, die dazu ausgerüstet sind, in vorgegebenen Zeitintervallen die aus der erneuerbaren Energiequelle generierte elektrische Energie (in kWh) zu messen und einen entsprechenden Messwert über eine Schnittstelle an ein Speichermedium zu übermitteln;
- Generierung eines einmaligen Identifikations-Codes für jeden der Energiezähler mittels einer auf dem Rechner geladenen Software;
- Übermittlung in vorgegebenen Zeitintervallen der Daten jedes registrierten Energiezählers an ein Speichermedium, wobei die Daten jedes Energiezählers die gemessene Energiemenge jedes Zeitintervalls und die Zeit und das Datum des Zeitintervalls umfassen;
- Generierung durch den Rechner von Original-Energie-Zertifikaten jeweils für die Energiemenge jedes Zeitintervalls jedes registrierten Energiezählers, wobei jedes Original-Energie-Zertifikat einen ersten Hash-Wert enthält, der aus ein oder mehreren von Daten gebildet wird, wobei diese Daten den genannten Identifizierungs-Code des jeweiligen Energiezählers, eine Identifikationsnummer des Original-Energie-Zertifikats, eine Herstellernummer (EMID) des Energiezählers, die Zeit und das Datum der in dem Zeitintervall generierten Energie, die in dem Zeitintervall generierte Energiemenge, die Art der erneuerbaren Energiequelle (1) und den Standort der erneuerbaren Energiequelle (1) umfassen;
- Anzeige eines oder mehrerer der Original-Energie-Zertifikate auf einer auf dem Rechner betriebenen Software-Plattform, wobei die Software-Plattform von Energieverbrauchern und Energieproduzenten einsehbar ist;
- Nachdem ein Energieverbraucher durch eine Eingabe in der Software-Plattform einem Kauf eines Original-Energie-Zertifikats zugestimmt hat und die Energiemenge gemäss dem gekauften Original-Energie-Zertifikat durch einen Grund-Stromversorger an den Energie-Verbraucher geliefert worden ist, Generierung eines Derivat-Zertifikats, das einen zweiten Hash-Wert enthält, der aus ein oder mehreren Daten des Original-Energie-Zertifikats und dem ersten Hash-Wert gebildet wird;
- Anzeige des Derivat-Zertifikats auf der Software-Plattform zur Einsicht durch den Verbraucher zwecks eines Nachweises der Herkunft und Daten der gekauften Energiemenge.

In einer ersten Ausführung des Verfahrens wird der einmalige Identifikations-Code für jeden registrierten Energie-Zähler mittels eines Hash-Werts generiert. Der Identifikations-Code ist somit eindeutig und nicht rückführbar.

In einer Ausführung des Verfahrens ist der einmalige Identifikations-Code jedes Energiezählers nur auf dem Rechner des erfindungsgemässen Verfahrens gespeichert. Er bleibt als solcher «private», indem nur der Betreiber des erfindungsgemässen Verfahrens auf diesen Code zugreifen kann.

In einer weiteren Ausführung des Verfahrens werden die Daten der registrierten Energiezähler jeweils über deren Schnittstellen in eine Cloud übermittelt und in der Cloud gespeichert.

In einer Variante werden die Daten der registrierten Energiezähler in einer Datenbank auf einem Rechner gespeichert.

In einer weiteren Ausführung des Verfahrens ist das vorgegebene Zeitintervall eine Viertelstunde.

In einer weiteren Ausführung des Verfahrens werden die Daten jedes Energiezählers und der einmalige Identifikations-Code jedes Energiezählers einer auf dem Rechner geladenen Software zugeführt. Diese generiert aus den genannten Daten des Energiezählers und dem Identifikations-Code des Energiezählers den ersten Hash-Wert, der dem Original-Energie-Zertifikat zugeteilt wird.

In einer weiteren Ausführung des Verfahrens wird durch die auf dem Rechner geladene Software aus dem ersten Hash-Wert eines Original-Energie-Zertifikats und einigen der Daten des Original-Energie-Zertifikats ein zweiter Hash-Wert generiert. Dieser zweite Hash-Wert wird dem Derivat-Zertifikat zugeteilt. Das Derivat-Zertifikat beinhaltet einen eindeutigen Nachweis der Herkunft der gekauften Energie. Zur Bildung des zweiten Hash-Werts werden ein oder mehrere der Daten des Original-Energie-Zertifikats verwendet, wobei diese den ersten Hash-Wert des Originalzertifikats, die Energiemenge des Zeitintervalls, die Zeit und das Datum der Energieerzeugung, die Identifikationsnummer des Original-Energie-Zertifikats sowie die Herstellernummer (EMID) des Energiezählers umfassen.

In einer Ausführung der Erfindung sind die Original-Energie-Zertifikate sowie Derivat-Zertifikate auf der Software-Plattform durch den Verbraucher mit allen relevanten Daten zur angebotenen Energie leserlich einsehbar. Die Daten, die in dem angezeigten Zertifikat dem Energieverbraucher bekannt gemacht werden, umfassen die angebotene Energiemenge, den Typ der Energiequelle der erzeugten Energie und die Zeit und das Datum der erzeugten Energie.

Der Typ der erneuerbaren Energiequelle ist z.B. eine Photovoltaikanlage, eine Windenergieanlage oder ein Kleinwasserkraftwerk.

Das Verfahren lässt sich in einem System anwenden, bei dem die generierte, erneuerbare Energie von Privathaushalten oder von Kleinanlagen auf Gebäuden verschiedener Art in das Netz eines Strom-Grundversorgers eingespeist wird. Die an einen Energieverbraucher verkaufte Energie wird sodann dem Strom-Grundversorger, fortan Grundversorger genannt, an den betreffenden Energieverbraucher geliefert. Die Kosten der gelieferten Energie werden dabei über den Grundversorger abgerechnet, indem der Energieverbraucher den Kaufpreis der Energie gemäss der gekauften Original-Energie-Zertifikate dem Grundversorger zahlt und der Grundversorger dem Besitzer der Energie-Anlage die Kosten der Energie vergütet. Als Beleg für den Kauf der Energie erhält der Energieverbraucher jeweils das Derivat-Zertifikat als Nachweis des Kaufs und der garantiert eindeutigen und korrekten Herkunft der gekauften Energie.

Das Verfahren ermöglicht so eine Lieferung der Energie sowie einen Geldfluss für den Kauf und Verkauf von Herkunftsnachweisen der erneuerbaren Energie über den Grundversorger. Es unterscheidet sich so von Verfahren, in denen die Energie und die Kosten dafür in einem direkten Peer-to-Peer ausgetauscht werden.

Die Software-Plattform kann von Energieverbrauchern und Besitzern von Energieanlagen, d.h. dem Energieproduzenten, mit einem Personal-Computer, Tablet oder Smart-Phone genutzt werden. Über diese Plattform können sich Energie-Produzenten, d.h. Lieferanten von Energie aus erneuerbaren Energiequellen, insbesondere Solaranlagen auf oder an privaten Liegenschaften oder auf oder an Liegenschaften von wirtschaftlichen Betrieben wie Industrieanlagen, Bauernhöfen, öffentlichen Gebäuden registrieren. Ebenso können sich Energie-Empfänger, d.h. Energieverbraucher, die über keine solchen Energiequellen verfügen jedoch erneuerbare Energie nutzen wollen, auf dieser Plattform registrieren.

Sobald eine registrierte erneuerbare Energiequelle Energie generiert, wird die Information der generierten Energie über den Energiezähler und dessen Schnittstelle täglich in Viertelstundenwerten oder Werten anderer Zeitintervalle an das Speichermedium übermittelt.

Das Speichermedium ist beispielsweise eine Cloud oder ein auf einem Server installierten Datenspeicher mit strukturierter Datenbank. Andere geeignete Speichermedien sind beispielsweise unstrukturierte Datenbanken oder Dateien auf einem Rechner. Der Zugriff auf die Energie-Zertifikate in einer Cloud oder einem Datenspeicher ist relativ schnell und kostengünstig und erfordert eine vertretbare Energiemenge zu deren Betrieb, dies insbesondere im Vergleich zu einer Abwicklung mittels Blockchain-Technologie.

Ein auf der Software-Plattform registrierter Energie-Konsument kann auf einem PC, Smart-Phone oder Tablet oder ähnlichem geeigneten Gerät Anzeigen über Original-Energie-Zertifikate einsehen und sich ein Bild darüber machen, in welchen Zeiträumen von welchen Energiequellen an welchen Orten Energie zum Kauf angeboten wird. Zudem erfährt der Energie-Verbraucher zu welchem Preis diese Energie erhältlich ist. Er gibt sodann über die Plattform ein, welche Energie-Zertifikate er kaufen will. So ist es dem Energie-Verbraucher freigestellt, welche Energie, insbesondere aus welchen Energiequellen und von welchen Orten er beziehen will. Das Energie-Zertifikat ermöglicht dank dem Identifikations-Code der Energiezähler, der mittels eines Hash-Werts generiert wird, eine eindeutige und unveränderbare, insbesondere fälschungssichere Identifikation des EnergieZählers für die gewählte erneuerbare Energie. Dem Energie-Verbraucher wird dadurch eine hohe Transparenz der Herkunft der bezogenen Energie geboten. Er erhält durch das Energie-Zertifikat einen Herkunftsnachweis, eine Art Qualitäts-Label, für die von ihm genutzten Energie. Auf der Plattform kann der Energie-Verbraucher klar den von ihm genutzten Strommix als Funktion der Zeit bezüglich des Orts und der Art der Energiequelle verfolgen. Er kann stets sehen, von welchem Nachbarn in unmittelbarer Nähe oder in seiner Region er den Strom bezieht, wobei der Strom über den Grundversorger geliefert wird. Der Energie-Verbraucher erhält durch das erfindungsgemässe Verfahren einen ökologischen Mehrwert, indem er stets weiss, wie sein individueller Strommix zusammenstellt ist. Dadurch ist es ihm ermöglicht, anhand dieser Information entsprechend zu handeln wie zum Beispiel seine Energienutzung zeitlich und/oder mengenmässig anzupassen. So kann das Verfahren zu einem zeitlichen Ausgleich der Energienutzung im Verteilnetz des Grundversorgers und einer Senkung der Maxima der Energienutzung (Peaks) führen.

Das Verfahren ermöglicht den Energie-Verbrauchern einerseits Transparenz bezüglich des Strommix der gekauften Energie. Die Transparenz führt zudem zu einer Förderung der Generierung von erneuerbarer Energie in der Region, indem die Besitzer der registrierten Energiezähler vom Grundversorger für die eingespeiste Energie und vom Käufer des Original-Energie-Zertifikates und den damit assoziierten ökologischen Mehrwert entschädigt werden.

Weitere Vorteile der Erfindung folgen aus der nachfolgenden Beschreibung, in welcher die Erfindung anhand eines in den schematischen Zeichnungen dargestellten Ausführungsbeispiels näher erläutert wird.

### Kurze Beschreibung der Figuren

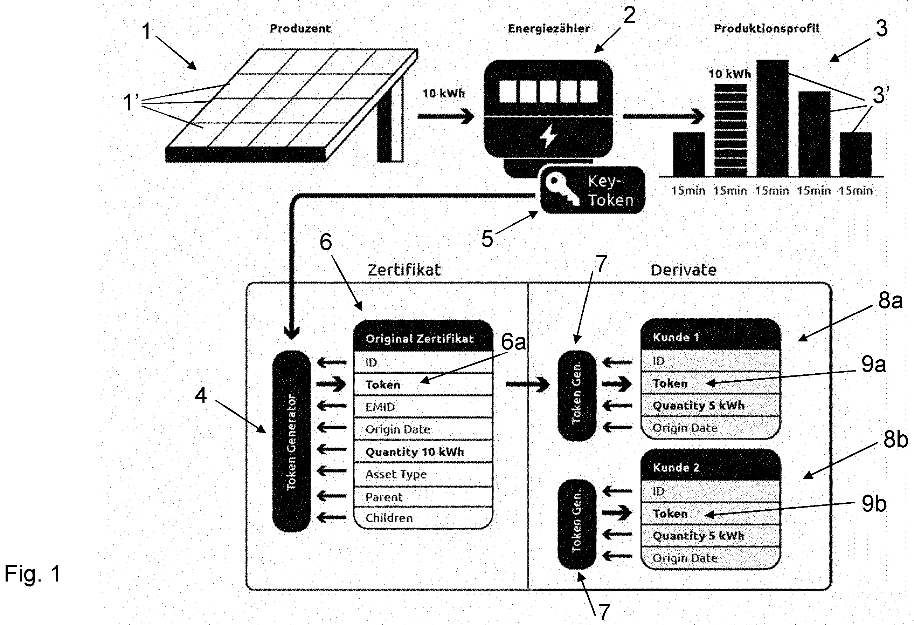

Fig. 1 zeigt ein Schema zur Erläuterung des erfindungsgemässen Verfahrens.

### Ausführungsbeispiel der Erfindung

In der Figur 1 ist eine erneuerbare Energiequelle, in diesem Beispiel ein Panel 1 von Solarzellen 1' gezeigt, die beispielsweise auf dem Dach eines Privathauses, eines wirtschaftlichen Betriebs oder auf einer geeigneten offenen Fläche installiert ist.

Bei genügender Sonneneinstrahlung generiert das Panel 1 elektrischen Strom, die bei Nicht-Gebrauch durch den Besitzer der Energiequelle in das Netz eines Stromgrundversorgers eingespeist wird. Die Energie, die ins Stromnetz des Grundversorgers gespeist wird, wird mittels eines Energiezählers 2 gemessen. Insbesondere wird die generierte Energie in vorgegebenen Zeitintervallen, zum Beispiel jede Viertelstunde, in kWh gemessen.

Gemäss dem Verfahren für den Kauf- und Verkauf von erneuerbarer Energie wird eine Energiequelle 1 oder mehrere solche Energiequellen mit einem entsprechenden Energiezähler 2 registriert, indem für den Energiezähler 2 ein Identifikations-Code 5 des Zählers 2 einmalig vom Manager des Verfahrens auf einem Rechner generiert wird. Der Identifikations-Code 5, in der Figur 1 als Key Token 5 bezeichnet, wird sodann bei der Generierung von Energie-Zertifikaten eingesetzt. Der Key Token 5 ist privat, d.h. er ist nur dem Inhaber des erfindungsgemässen Dienstleistungs-Verfahrens bekannt. Der Key Token 5 ist ein Hashwert, und somit ein eindeutiger, unveränderbarer und nicht rückführbarer Identifikations-Code.

Der Energiezähler 2 weist eine Schnittstelle auf, über die die Energiedaten, insbesondere die Energiemengen jeder Viertelstunde und die dazugehörige Uhrzeit an einen Datenspeicher übermittelt wird. Die Daten werden beispielsweise via Standardisierten Datenaustausch für den Strommarkt Schweiz (SDAT) übermittelt. Das Schema zeigt ein Beispiel eines möglichen Produktionsprofils 3 eines gegebenen Energiezählers 2, das einen zeitabhängigen Datensatz umfasst mit den Energiemengen, die jeweils jede Viertelstunde erzeugt und in das Stromnetz eines Grundversorgers eingespeist worden sind. Dabei wird beispielsweise die Energiemenge jeder Viertelstunde zu einer Genauigkeit von 10 kWh übermittelt. Der Datensatz 3 lässt sich graphisch, beispielsweise wie gezeigt, in einem Balkendiagramm 3 darstellen, in dem jeder Balken 3' der generierten Energiemenge einer gegebenen Viertelstunde entspricht.

Die viertelstündlichen Daten des Energiezählers 2 werden über die Schnittstelle einem Speichermedium, z.B. einer Cloud zugeführt. Gemäss dem Verfahren werden sie sodann viertelstündlich einem Rechner zugeführt, auf dem eine Software, einem Token-Generator 4, geladen ist. Der Token-Generator 4 generiert einen ersten Zertifikats-Token 6a, der beispielsweise aus einem Hash-Wert besteht, der aus den Daten des Energiezählers 2 und dem Key-Token 5des Energiezählers 2 generiert wird. Die Daten des Zählers 2 beinhalten zum Beispiel die Energiemenge der betreffenden Viertelstunde, den Ort, das Datum und die Zeit der generierten Energie sowie den Typ der generierten Energie. Im schematisch gezeigten Beispiel wird der Hash-Wert für den Zertifikats-Token 6a aus den folgenden Daten generiert:
- eine vorgegebene Identifikationsnummer (ID) des generierten Zertifikats
- eine Zählernummer (EMID), welche der Herstellernummer des Zählers entspricht,
- das Datum und die Uhrzeit (origin date) der betreffenden Viertelstunde,
- die erzeugte Energiemenge der betreffenden Viertelstunde und
- den Typ der Energiequelle (asset type).

Mittels des Zertifikats-Tokens 6a und den oben genannten Zählerdaten wird sodann ein Original-Energie-Zertifikat 6 gebildet, das potenziellen Energie-Verbrauchern zum Kauf angeboten wird.

In einer Variante wird das Original-Energie-Zertifikat 6 auch als sogenanntes Parent- oder Vater-Zertifikat gebildet, das jeweils die gesamte Energiemenge der betreffenden Viertelstunde repräsentiert. Hierzu wird der Zertifikats-Token 6a mit den oben genannten Daten und dem Key-Token 5 generiert. Anderseits kann das Original-Energie-Zertifikat auch in mehrere Teil-Zertifikate, sogenannten Children-Zertifikate, unterteilt werden, die jeweils eine kleinere Energiemenge enthalten. In diesem Fall wird der Zertifikats-Token 6a aus den oben genannten Daten, jedoch mit Teil-Energiemengen generiert.

Um die Original-Energie-Zertifikate 6a zum Kauf anzubieten, werden die Original-Energie-Zertifikate 6a jeweils einer Software-Plattform zugeführt, beispielsweise einer Web-basierten Plattform. Die Plattform kann auf einem geeigneten Kommunikations-Gerät wie einem PC, einem Tablet oder einem Smart-Phone angezeigt werden. Ein potenzieller Energie-Verbraucher kann über die Plattform das Angebot von Original-Energie-Zertifikaten 6 einsehen und bei Bedarf einen Kauf von Energie-Zertifikaten 6 seiner Wahl durch eine entsprechende Eingabe auf der Software-Plattform anzeigen und so den Kauf der Energie auslösen. Jedem Energie-Verbraucher, d.h. jedem Kunden, ist es so freigestellt, von welcher Art erneuerbarer Energiequelle, von welchem Ort und zu welcher Zeit die Energie zu kaufen. Ist ein Kauf einer Energiemenge gemäss einem oder mehreren Original-Energie-Zertifikaten durch einen Verbraucher ausgelöst worden, so wird der entsprechende ökologische Mehrwert der Energie über den Grundversorger dem Verbraucher geliefert und von diesem auch abgerechnet.

Nach dem Verkauf des ökologischen Mehrwerts der Energie an einen oder mehrere Kunden, wird der Zertifikats-Token 6a des Original-Energie-Zertifikats 6 einem zweiten Token-Generator 7 zugeführt. Dieser zweite Token Generator 7 erstellt aus dem ersten Zertifikats-Token 6a des Original-Energie-Zertifikats und Daten des Original-Energie-Zertifikats, wie z.B. die Energiemenge, die Uhrzeit, den Ort und den Type der Energie, einen dritten Token 9a, bzw. 9b. Es wird sodann ein Derivat-Zertifikat 8a, 8b erstellt, dem der dritte Token 9a bzw. 9b zugeteilt ist sowie eine ID des Derivats-Zertifikats, das Datum der gekauften Energiemenge und die gekaufte Energiemenge enthält. Der zweite Token-Generator 7 ist wiederum eine auf einem Rechner geladene Software zur Bildung eines Hash-Werts aus den genannten Daten. Die durch den Token-Generator 7 gebildeten Hash-Werte, die Derivats-Token 9a, 9b, bilden für den Verbraucher bzw. Kunden ein Zertifikat der Herkunft der erworbenen Energie dar.

Das Verfahren zum Austausch von Energie umfasst eine mehrfache Bildung von Hash-Werten zur Generierung der verschiedenen Token 5, 6a, 9a und 9b. Die bei der Bildung der Hash-Werte mehrfache Vermischung der Daten der Energiezähler 2, den Energie-Verbraucher und dem Key-Token 5 bzw. den Zertifikats-Token 6a wird eine hohe Sicherheit der eindeutigen Herkunft der angebotenen und gekauften Energie gewährleistet.

Durch dieses Verfahren ist die Identität des Energiezählers, d.h. der Herkunft der erneuerbaren Energie, eindeutig und fälschungssicher und gewährt somit dem Kunden die Sicherheit der Herkunftsangabe des angebotenen und gekauften ökologischen Mehrwerts der Energie.

### Bezugszeichenliste

- 1: Solaranlage mit einzelnen Solarzellen
- 2: Energiezähler für die von der Solaranlage generierten Energie
- 3: Datensatz aus Energiezähler
- .4: Token-Generator, Software zur Generierung von Hash-Werten
- 5: einmaliger Identifikations-Code für Energiezähler
- 6: Original-Energie-Zertifikat
- 6a: zweiter Token, Token für Original-Energie-Zertifikat
- 7: zweiter Token-Generator, Software zur Generierung von Hash-Wert
- 8a,b: Derivat-Zertifikat, Herkunftsnachweis von Kauf
- 9a,b: dritter Token, Token für Derivat-Zertifikat

## Patentansprüche

1. Verfahren für den Kauf und Verkauf von Herkunftsnachweisen von Energie aus erneuerbaren Energiequellen (1) umfassend folgende Schritte:
- Registrierung auf einem Rechner von mehreren Energiezählern (2) zum Zählen von aus erneuerbarer Energiequelle generierter, elektrischer Energie, die dazu ausgerüstet sind, aus der erneuerbaren Energiequelle (1) generierte, elektrische Energie in einem vorgegebenen Zeitintervall zu messen und einen entsprechenden Messwert über eine Schnittstelle an ein Speichermedium zu übermitteln;
- Generierung eines einmaligen Identifikations-Codes (5) für jeden der Energiezähler (2) mittels einer auf dem Rechner geladenen Software;
- Übermittlung von Daten von jedem registrierten Energiezähler (2) an das Speichermedium im vorgegebenen Zeitintervall, wobei die Daten jedes Energiezählers (2) die gemessene Energiemenge jedes Zeitintervalls und die Zeit und das Datum des Zeitintervalls umfassen;
- Generierung durch den Rechner von Original-Energie-Zertifikaten (6) jeweils für die Energiemenge jedes vorgegebenen Zeitintervalls jedes registrierten Energiezählers (2), wobei jedes Original-Energie-Zertifikat (6) einen ersten Hash-Wert (6a) enthält, der aus mehreren von Daten gebildet wird, wobei diese mehreren von Daten den genannten Identifikations-Code (5) des jeweiligen Energiezählers (2) und die Zeit und das Datum der in dem Zeitintervall generierten Energie umfassen;
- Anzeige eines oder mehrerer der Original-Energie-Zertifikate (6) auf einer auf dem Rechner betriebenen Software-Plattform, wobei die Software-Plattform von registrierten Energieverbrauchern und Energieproduzenten einsehbar ist;
- Nachdem ein Energie-Verbraucher durch eine Eingabe in der Software-Plattform einem Kauf eines Original-Energie-Zertifikats zugestimmt hat und die Energiemenge gemäss dem gekauften Original-Energie-Zertifikat durch einen Grundversorger an den Energie-Verbraucher geliefert worden ist,
Generierung eines oder mehrerer Derivat-Zertifikate (8a, 8b), die jeweils einen zweiten Hash-Wert (9a, 9b) enthalten, der aus einem oder mehreren Daten des Original-Energie-Zertifikats (6) und dem ersten Hash-Wert (6a) gebildet wird.
- Anzeige des einen oder der mehreren Derivat-Zertifikate (8a, 8b) auf der Software-Plattform zur Einsicht durch den Energieverbraucher zwecks eines Nachweises der Herkunft und Daten der gekauften Energiemenge.

2. Verfahren gemäss Anspruch 1, **dadurch gekennzeichnet, dass** die mehreren von Daten zusätzlich eine Identifikationsnummer des Original-Energie-Zertifikats (6) und/oder eine Herstellernummer (EMID) des Energiezählers (2) und/oder die Art der erneuerbaren Energiequelle (1) und/oder den Standort der erneuerbaren Energiequelle (1) umfassen.

3. Verfahren gemäss Anspruch 1 oder 2,
**dadurch gekennzeichnet, dass**
das vorgegebene Zeitintervall eine Viertelstunde ist.

4. Verfahren gemäss einem der Ansprüche 1-3,
**dadurch gekennzeichnet, dass**
der einmalige Identifikations-Code (5) für jeden registrierten Energie-Zähler (2) mittels eines Hash-Werts generiert wird.

5. Verfahren gemäss einem der Ansprüche 1-4,
**dadurch gekennzeichnet, dass**
der einmalige Identifikations-Code (5) jedes Energiezählers (2) nur auf dem Rechner zur Durchführung des Verfahrens gespeichert ist.

6. Verfahren gemäss einem der Ansprüche 1-5
**dadurch gekennzeichnet, dass**
die Daten der registrierten Energiezähler (2) jeweils über deren Schnittstellen in eine Cloud übermittelt und dort gespeichert werden.

7. Verfahren gemäss einem der Ansprüche 1-5
**dadurch gekennzeichnet, dass**
die Daten der registrierten Energiezähler (2) jeweils über deren Schnittstellen in eine Datenbank übermittelt und dort gespeichert werden.

8. Verfahren gemäss einem der Ansprüche 1-7
**dadurch gekennzeichnet, dass**
die Daten jedes Energiezählers (2) und der einmalige Identifikations-Code (5) jedes Energiezählers (2) einer auf dem Rechner geladenen Software zugeführt werden, die aus den genannten Daten des Energiezählers (2) und dem Identifikations-Code (5) jedes Energiezähler (2) einen ersten Hash-Wert (6a) generiert, der dem Original-Energie-Zertifikat (6) zugeteilt wird.

9. Verfahren gemäss einem der Ansprüche 1-8
**dadurch gekennzeichnet, dass**
mittels der auf dem Rechner geladenen Software aus dem ersten Hash-Wert (6a) eines Original-Energie-Zertifikats (6) und ein oder mehrere der Daten des Original-Energie-Zertifikats der zweite Hash-Wert (9a, 9b) generiert wird, wobei diese Daten den ersten Hash-Wert des Originalzertifikats, die Energiemenge, die Zeit und das Datum der Energieerzeugung, die Identifikationsnummer des Original-Energie-Zertifikats sowie die Herstellernummer (EMID) des Energiezählers umfassen, und wobei der zweite Hash-Wert (9a, 9b) dem Derivat-Zertifikat (8a, 8b) zugeteilt wird.

10. Verfahren gemäss einem der Ansprüche 1-9
**dadurch gekennzeichnet, dass**
für die Energiemenge eines bestimmten Zeitintervalls gemäss einem bestimmten Energiezähler (2) mehrere Original-Energie-Zertifikate (6) gebildet werden, wobei jedes der mehreren Original-Energie-Zertifikate (6) einen Hash-Wert (6a) enthält, der aus den Daten des Energiezählers (2), dem einmaligen Identifikations-Code (5) des Energiezählers (2) und einer Teilmenge der Energie des betreffenden Zeitintervalls gebildet worden ist.

11. Verfahren gemäss einem der Ansprüche 1-10
**dadurch gekennzeichnet, dass**
die Software-Plattform über das Internet einsehbar ist.

12. Anwendung des Verfahrens gemäss einem der Ansprüche 1-11
in einem System, bei dem aus erneuerbaren Energiequellen in Privathaushalten oder Gewerbegebäuden in das Netz eines Grundversorgers eingespeist wird und Energie vom Grundversorger an Energieverbraucher geliefert wird.

## Claims

1. A method for purchase and sale of proof of origin of energy from renewable energy sources (1) including the following steps:
- Registration on a computer of several energy meters (2) for counting electrical energy generated from a renewable energy source, which are equipped to measure electrical energy generated from the renewable energy source (1) in a specified time interval and to transmit a corresponding measured value via an interface to a storage medium;
- Generation of a unique identification code (5) for each of the energy meters (2) by means of software loaded on the computer;
- Transmission of data from each registered energy meter (2) to the storage medium in the specified time interval, where the data of each energy meter (2) includes the measured amount of energy of each time interval and the time and date of the time interval;
- Generation by the computer of original energy certificates (6) each for the amount of energy of each given time interval of each registered energy meter (2), wherein each original energy certificate (6) contains a first hash value (6a) which is formed from multiple of data, wherein these multiple data include the said identification code (5) of the respective energy meter (2) and the time and date of the energy generated in the time interval;
- Display one or more of the original energy certificates (6) on a software platform operated on the computer, whereby the software platform can be viewed by registered energy consumers and energy producers;
- After an energy consumer has agreed to the purchase of an original energy certificate by entering it in the software platform and the amount of energy has been delivered to the energy consumer by a basic supplier in accordance with the purchased original energy certificate,
Generation of one or more derivative certificates (8a, 8b), each containing a second hash value (9a, 9b), which is formed from one or more data of the original energy certificate (6) and the first hash value (6a).
- Display of one or more derivative certificates (8a, 8b) on the software platform for inspection by the energy consumer in order to prove the origin and data of the purchased amount of energy.

2. The method according to claim 1, **characterized in that** the multiple data additionally comprise an identification number of the original energy certificate (6) and/or a manufacturer number (EMID) of the energy meter (2) and/or the type of renewable energy source (1) and/or the location of the renewable energy source (1).

3. The method of claim 1 or 2,
**characterized in that**
the given time interval is a quarter of an hour.

4. The method according to any one of claims 1-3,
**characterized in that**
the unique identification code (5) for each registered energy meter (2) is generated by means of a hash value.

5. The method according to any one of claims 1-4,
**characterized in that**
the unique identification code (5) of each energy meter (2) is stored only on the computer used to carry out the procedure.

6. The method according to any one of claims 1-5
**characterized in that**
the data of the registered energy meters (2) are transmitted to a cloud via their interfaces and stored there.

7. The method according to any one of claims 1-5
**characterized in that**
the data of the registered energy meters (2) are transmitted to a database via their interfaces and stored there.

8. The method according to any one of claims 1-7
**characterized in that**
the data of each energy meter (2) and the unique identification code (5) of each energy meter (2) are fed into software loaded on the computer, which generates a first hash value (6a) from the said data of the energy meter (2) and the identification code (5) of each energy meter (2), which is assigned to the original energy certificate (6).

9. The method according to any one of claims 1-8
**characterized in that**
the second hash value (9a, 9b) is generated by means of the software loaded on the computer from the first hash value (6a) of an original energy certificate (6) and one or more of the data of the original energy certificate, whereby this data includes the first hash value of the original certificate, the amount of energy, the time and date of energy production, the identification number of the original energy certificate and the manufacturer number (EMID) of the energy meter, and where the second hash value (9a, 9b) is assigned to the derivative certificate (8a, 8b).

10. The method according to any one of claims 1-9
**characterized in that**
for the amount of energy of a given time interval according to a specific energy meter (2), several original energy certificates (6) are formed, each of the several original energy certificates (6) containing a hash value (6a) which has been formed from the data of the energy meter (2), the unique identification code (5) of the energy meter (2) and a subset of the energy of the relevant time interval.

11. The method according to any one of claims 1-10
**characterized in that**
the software platform can be viewed via the Internet.

12. Application of the method according to any one of claims 1-11
in a system in which renewable energy sources in private households or commercial buildings are fed into the grid of a basic supplier and energy is supplied by the basic supplier to energy consumers.

## Revendications

1. Procédé d'achat et de vente de justificatifs d'origine d'énergie à partir de sources d'énergie renouvelables (1) comprenant les étapes suivantes :
- enregistrement sur un ordinateur de plusieurs compteurs d'énergie (2) pour décompter de l'énergie électrique, générée à partir d'une source d'énergie renouvelable, qui sont équipés à cet effet pour mesurer dans un intervalle de temps prédéfini l'énergie électrique générée à partir de la source d'énergie renouvelable (1) et transmettre une valeur de mesure correspondante par une interface à un moyen de mémorisation,
- génération d'un code d'identification unique (5) pour chacun des compteurs d'énergie (2) au moyen d'un logiciel chargé sur l'ordinateur,
- transmission de données de chaque compteur d'énergie enregistré (2) au moyen de mémorisation dans l'intervalle de temps prédéfini, sachant que les données de chaque compteur d'énergie (2) comprennent la quantité d'énergie mesurée de chaque intervalle de temps et le temps et la date de l'intervalle de temps,
- génération par l'ordinateur des certificats d'énergie originaux (6) à chaque fois pour la quantité d'énergie de chaque intervalle de temps prédéfini de chaque compteur d'énergie enregistré (2), sachant que chaque certificat d'énergie original (6) contient une première valeur de hachage (6a), qui est formée de plusieurs des données, sachant que plusieurs de ces données comprennent ledit code d'identification (5) du compteur d'énergie respectif (2) et le temps et la date de l'énergie générée dans l'intervalle de temps,
- affichage d'un ou de plusieurs certificats d'énergies originaux (6) sur une plateforme de logiciel pratiquée sur l'ordinateur, sachant que la plateforme de logiciel peut être consultée par les consommateurs d'énergie et les producteurs d'énergie enregistrés,
- après qu'un consommateur d'énergie ait donné son consentement par une introduction dans la plateforme de logiciel pour un achat d'un certificat d'énergie original et la quantité d'énergie ait été livrée selon le certificat d'énergie original acheté par un fournisseur de base au consommateur d'énergie, génération d'un ou plusieurs certificats de dérivé (8a, 8b), qui contiennent respectivement une deuxième valeur de hachage (9a, 9b), qui est formée d'une ou plusieurs données du certificat d'énergie original (6) et de la première valeur de hachage (6a),
- affichage d'une ou de plusieurs certificats de dérivé (8a, 8b) sur la plateforme de logiciel pour consultation par le consommateur d'énergie dans le but d'une justification de l'origine et des données de la quantité d'énergie achetée.

2. Procédé selon la revendication 1, **caractérisé en ce que** plusieurs des données comprennent en plus un numéro d'identification du certificat d'énergie original (6) et/ou un numéro de fabricant (EMID) du compteur d'énergie (2) et/ou le type de source d'énergie renouvelable (1) et/ou le lieu de la source d'énergie renouvelable (1).

3. Procédé selon la revendication 1 ou 2,
**caractérisé en ce que**
l'intervalle de temps prédéfini est un quart d'heure.

4. Procédé selon l'une quelconque des revendications 1 - 3,
**caractérisé en ce que**
le code d'identification unique (5) pour chaque compteur d'énergie enregistré (2) est généré au moyen d'une valeur de hachage.

5. Procédé selon l'une quelconque des revendications 1 - 4,
**caractérisé en ce que**
le code d'identification unique (5) de chaque compteur d'énergie enregistré (2) n'est mémorisé que sur l'ordinateur pour l'exécution du procédé.

6. Procédé selon l'une quelconque des revendications 1 - 5,
**caractérisé en ce que**
les données du compteur d'énergie enregistré (2) sont respectivement transmises par son interface dans un 'nuage informatique' [cloud] et y sont mémorisées.

7. Procédé selon l'une quelconque des revendications 1 - 5,
**caractérisé en ce que**
les données des compteurs d'énergie enregistrés (2) sont respectivement transmises par leurs interfaces à une banque de données et y sont mémorisées.

8. Procédé selon l'une quelconque des revendications 1 - 7,
**caractérisé en ce que**
les données de chaque compteur d'énergie (2) et le code d'identification unique (5) de chaque compteur d'énergie (2) sont acheminées vers un logiciel chargé sur l'ordinateur, qui génère à partir desdites données du compteur d'énergie (2) et du code d'identification (5) de chaque compteur d'énergie (2), une première valeur de hachage (6a), qui est attribuée au certificat d'énergie original (6).

9. Procédé selon l'une quelconque des revendications 1 - 8,
**caractérisé en ce que**
la deuxième valeur de hachage (9a, 9b) est générée au moyen du logiciel chargé sur l'ordinateur à partir de la première valeur de hachage (6a) d'un certificat d'énergie original (6) et d'une ou deplusieurs des données du certificat d'énergie original, sachant que ces données comprennent la première valeur de hachage du certificat original, la quantité d'énergie, le temps et la date de la production d'énergie, le numéro d'identification du certificat d'énergie original ainsi que le numéro de fabricant (EMID) du compteur d'énergie et sachant que la deuxième valeur de hachage (9a, 9b) est attribuée au certificat de dérivé (8a, 8b).

10. Procédé selon l'une quelconque des revendications 1 - 9,
**caractérisé en ce que**
plusieurs certificats d'énergie originaux (6) sont formés pour la quantité d'énergie d'un intervalle de temps déterminé selon un compteur d'énergie déterminé (2), sachant que chacun des nombreux certificats d'énergie originaux (6) contient une valeur de hachage (6a), qui a été formée à partir des données du compteur d'énergie (2), du code d'identification unique (5) du compteur d'énergie (2) et d'une quantité partielle d'énergie de l'intervalle de temps concerné.

11. Procédé selon l'une quelconque des revendications 1 - 10, **caractérisé en ce que** la plateforme de logiciel peut être consultée par le biais d'Internet.

12. Utilisation du procédé selon l'une quelconque des revendications 1 - 11 dans un système pour lequel l'alimentation se fait à partir de sources d'énergie renouvelables dans les ménages privés ou bâtiments commerciaux dans le réseau d'un fournisseur de base et l'énergie est fournie par un fournisseur de base au consommateur d'énergie.
